# EUROPÄISCHE PATENTSCHRIFT

(11) **EP 0 827 355 B1**
(45) Veröffentlichungstag und Bekanntmachung des Hinweises auf die Patenterteilung: **27.12.2006**
(21) Anmeldenummer: 97113668.4
(22) Anmeldetag: 07.08.1997
(51) Int. Cl.: H04Q 7/38, H04M 15/00

(54) **Verfahren und System zur Bestimmung des Aufenthaltsorts eines in einem zellularen Mobilfunknetz registrierten Funkteilnehmers**
Method and system for locating a mobile subscriber registered in a cellular mobile radio network
Méthode et système de localisation d'un abonné mobile enregistré dans un réseau radio mobile cellulaire

(30) Priorität: 02.09.1996 DE 19635581
(43) Veröffentlichungstag der Anmeldung: 04.03.1998
(73) Patentinhaber: SIEMENS AKTIENGESELLSCHAFT, 80333 München (DE)
(72) Erfinder: Wiehe, Ulrich, 36251 Bad Hersfeld (DE)

(56) Entgegenhaltungen:
- EP-A- 0 675 663
- WO-A-92/13428
- US-A- 5 400 390
- "Digital cellular telecommunications system (Phase 2+); Support of Optimal Routing (SOR); Technical Realization (GSM 03.79)" ETSI TS 101 045 V.5.0.1, 1. April 1997 (1997-04-01), XP002113583

## Beschreibung

Die Erfindung betrifft ein Verfahren und ein System zur Bestimmung des Aufenthaltsorts eines in einem zellularen Mobilfunknetz registrierten Funkteilnehmers für eine optimierte Leitweglenkung bei einem an den Funkteilnehmer gerichteten ankommenden Anruf gemäß dem Oberbegriff des Patentanspruchs 1 bzw. des Patentanspruchs 10.

Ein zellulares Mobilfunknetz wie beispielsweise das nach dem GSM-Standard (Global System for Mobile Communication) definierte digitale Funkkommunikationssystem ist aus einer Vielzahl von Funkzellen aufgebaut und bietet dem Funkteilnehmer ein Höchstmaß an Mobilität im Rahmen der Funkkommunikation. Das länderübergreifende internationale Mobilfunknetz nach dem GSM-Standard weist ein Basisstationssystem zum Auf- und Abbau und zur Aufrechterhaltung von Funkverbindungen zwischen mobilen Funkteilnehmerstationen und Basisstationen, ein vermittlungstechnisches System zum Aufbau, Verwalten und Auslösen von Verbindungen unter Berücksichtigung mobilitätsspezifischer Funktionen sowie ein Betriebs- und Wartungssystem zur Überwachung von Betriebszuständen und zur Steuerung der im Mobilfunknetz verteilt angeordneten Netzkomponenten. Zu den Aufgaben des vermittlungstechnischen Systems gehört die Verwaltung der Teilnehmerdaten der Funkteilnehmer, das Auffinden des Aufenthaltsorts eines angerufenen Funkteilnehmers bzw. seiner mobilen Funkteilnehmerstation an jedem beliebigen Ort des GSM-Versorgungsbereiches, der Verbindungsaufbau und die Erfassung der Gebührendaten (Vergebührung) für Anrufe, die vom Funkteilnehmer abgehen bzw. beim Funkteilnehmer ankommen. Zur Durchführung der Aufgaben verfügt das vermittlungstechnische System über Mobilvermittlungsstellen, die insbesondere die mobilitätsbedingten Verfahren und Funktionen beim Auf- und Abbau von Verbindungen und bei der Verbindungsbehandlung innerhalb des Mobilfunknetzes und an den Schnittstellen zu anderen Kommunikationsnetzen übernehmen, sowie über Besucherregister und Heimatregister, von denen das Besucherregister die Teilnehmerdaten der gerade im Versorgungsbereich einer zugeordneten Mobilvermittlungsstelle befindlichen Funkteilnehmer temporär enthält, während im Heimatregister die Teilnehmerdaten der Funkteilnehmer permanent verwaltet werden.

Die Teilnehmerdaten legen das Teilnehmerprofil, d.h. die vom Funkteilnehmer gebuchten Dienste und Berechtigungen, fest. Darüber hinaus speichert das Heimatregister eine Information zur Identifikation des Besucherregisters, in dem der Funkteilnehmer auf Grund seines Aufenthalts gerade verwaltet wird. Dies ist in der Regel die Adresse des Besucherregisters bzw. der Mobilvermittlungsstelle, so daß durch eine von der Mobilvermittlungsstelle an das Heimatregister gerichtete Aufenthaltsabfrage der Aufenthaltsort des Funkteilnehmers ermittelt werden kann. Über die Adresse des aktuell zuständigen Besucherregisters kann das Heimatregister eine Aufenthaltsrufnummer (mobile subscriber roaming number) abfragen, die benötigt wird, um eine Verbindung von einer Zugangs-Mobilvermittlungstelle (gateway mobile switching center) zu einer Besucher-Mobilvermittlungsstelle (visited mobile switching center) aufbauen zu können.

Zur Unterstützung einer optimierten Leitweglenkung (optimal routing) im GSM-Mobilfunknetz kann gemäß der GSM-Empfehlung 03.79, Version 0.9.0 vom 31.07.1996 von der Zugangs-Mobilvermittlungsstelle eines ersten Netzes eine Nachricht zur Aufenthaltsabfrage an das Heimatregister eines anderen Netzes, in dem der angerufene Funkteilnehmer permanent mit seinen Teilnehmerdaten registriert wird, netzübergreifend gesendet werden. Der Zweck der Aufenthaltsabfrage liegt in einer Bereitstellung von Informationen, anhand der von der Zugangs-Mobilvermittlungsstelle eine direkte Verbindung zu einer Besucher-Mobilvermittlungsstelle eines anderen Netzes, in dem der angerufene Funkteilnehmer aufgrund seines Aufenthaltsortes aktuell registriert ist, aufgebaut werden kann.

Nach der genannten GSM-Empfehlung 03.79 ist zur Unterstützung der optimierten Leitweglenkung eine zweistufige Aufenthaltsabfrage erforderlich, bei der zunächst von der Zugangs-Mobilvermittlungsstelle mit einer ersten an das Heimatregister des anderen Netzes gerichteten Abfrage (send location info) lediglich Informationen über den Aufenthaltsort des angerufenen Funkteilnehmer, z.B. in Form der Adresse der zuständigen Besucher-Mobilvermittlungsstelle, abgerufen werden. Zu diesem Zweck wird vom Heimatregister eine Nachricht zur Abfrage von Teilnehmerinformationen (provide subscriber info) an das für den Funkteilnehmer aktuell zuständige Besucherregister gesendet und als Quittung eine Nachricht (provide subscriber info acknowledge) empfangen. Das Heimatregister sendet daraufhin eine Information zuzr Identifikation der Besucher-Mobilvermittlungsstelle in einer Nachricht (send location info acknowledge), mit der die erste Abfrage quittiert wird, zur Zugangs-Mobilvermittlungsstelle zurück.

Danach wird von der Zugangs-Mobilvermittlungsstelle überprüft, ob aus Gründen der Vergebührung dem Aufbau einer direkten Verbindung zur Besucher-Mobilvermittlungsstelle nichts im Wege steht. Die Anforderungen an die Vergebührung des Anrufes bei der Unterstützung der optimierten Leitweglenkung sind in der GSM-Empfehlung 03.79 im Kapitel 9.1 auf Seite 24 beschrieben. Ist das Ergebnis der Überprüfung positiv, so wird von der Zugangs-Mobilvermittlungsstelle eine zweite Aufenthaltsabfrage (send routing info) an das Heimatregister gerichtet, um vom Besucherregister die Aufenthaltsrufnummer anzufordern. Der Vorteil der zweistufigen Aufenthaltsabfrage, die jeweils von der Zugangs-Mobilvermittlungsstelle initiiert werden muß, liegt darin, daß die Aufenthaltsrufnummer erst dann vom Besucherregister angefordert wird, wenn nach Überprüfung der Vergebührungsanforderungen die Nutzung einer Aufenthaltsrufnummer für den Verbindungsaufbau sichergestellt und somit die Vergabe von Aufenthaltsrufnummern, die wegen nicht erfüllter Vergebührungsanforderungen ungenutzt bleiben, vermieden wird.

Aufgabe der Erfindung ist es, ein Verfahren und ein System der eingangs genannten Art anzugeben, durch das die Aufenthaltsabfrage für eine optimierte Leitweglenkung in Bezug auf Signalisierungslast und Verbindungsaufbauzeit verbessert werden kann.

Diese Aufgabe wird gemäß der Erfindung durch die Merkmale des Patentanspruchs 1 hinsichtlich des Verfahrens und durch die Merkmale des Patentanspruchs 10 hinsichtlich des Systems gelöst. Weiterbildungen der Erfindung sind in den Unteransprüchen angegeben.

Eine geringere Signalisierungslast und eine kürzere Verbindungsaufbauzeit gegenüber der bekannten zweistufigen Aufenthaltsabfrage wird dadurch erreicht, daß das Heimatregister selbst bei Empfang der Nachricht zur Aufenthaltsabfrage die Durchführbarkeit des Aufbaus der direkten Verbindung zwischen Zugangs-Mobilvermittlungsstelle und Besucher-Mobilvermittlungsstelle überprüft und bei positivem Prüfungsergebnis eine modifizierte Nachricht, in der zusätzlich ein Kennzeichen zur Anforderung einer temporären Aufenthaltsrufnummer enthalten ist, an das Besucherregister sendet. Dadurch kann das Heimatregister bereits nach erstmaligem Empfang einer Aufenthaltsabfrage die Durchführbarkeit des Verbindungsaufbaus aus Gründen der Vergebührung des Anrufs durchführen und sofort - d.h. ohne Warten auf eine erneute Aufenthaltsabfrage gemäß dem beschriebenen bekannten Verfahren - die Aufenthaltsrufnummer vom zuständigen Besucherregister abrufen und zur anfordernden Zugangs-Mobilvermittlungsstelle senden. Der Vorteil der bekannten Lösung einer Sicherstellung, daß nur wirklich benötigte temporäre Aufenthaltsrufnummern vergeben und belegt werden, bleibt beim erfindungsgemäßen Verfahren erhalten. Die zusätzlichen Vorteile der Erfindung bestehen in einer geringeren Signalisierungslast durch Wegfall mehrerer Signalsierungsnachrichten, die bei der zweistufigen Aufenthaltsabfrage zwischen den Komponenten zur Unterstützung der optimierten Leitweglenkung erforderlich sind, sowie in einem schnelleren Verbindungsaufbau bei einer direkten Verbindung zwischen Mobilvermittlungsstellen eines ersten und zweiten Netzes.

Gemäß einer Weiterbildung der Erfindung wird vom Besucherregister die zur Abfrage von Teilnehmerinformationen vorgesehene Nachricht auf das Vorhandensein des Kennzeichens überprüft und bei positivem Prüfungsergebnis eine Aufenthaltsrufnummer vergeben, die in einer Nachricht, mit der die Abfrage quittiert wird, zusätzlich zum Heimatregister rückgesendet wird. Vorzugsweise wird vom Besucherregister die Überprüfung der Nachricht zur Abfrage von Teilnehmerinformationen nur für den Fall durchgeführt, daß der Funkteilnehmer erreichbar ist.

Gemäß einer anderen Weiterbildung der Erfindung wird vom Heimatregister eine Nachricht zur Zugangs-Mobilvertnittlungsstelle rückgesendet, mit der die Aufenthaltsabfrage quittiert und zusätzlich die vom Besucherregister auf Anforderung vergebene Aufenthaltsrufnummer übertragen wird.

Von Vortei ist es, wenn von der Zugangs-Mobilvermittlungsstelle die eintreffende Nachricht auf Vorhandensein einer Aufenthaltsrufnummer überprüft wird, so daß bei positivem Prüfungsergebnis anhand der Aufenthaltsrufnummer die direkte Verbindung zur Besucher-Mobilvermittlungsstelle aufgebaut oder bei negativem Prüfungsergebnis eine zweite Nachricht zur Aufenthaltsabfrage an das Heimatregister gesendet wird. Somit können sowohl das bekannte Verfahren als auch das neue und erfinderische Verfahren unabhängig voneinander und nebeneinander bestehen. Für den Fall, daß nach der ersten Aufenthaltsabfrage vom Heimatregister bereits eine temporäre Aufenthaltsrufnummer übermittelt wurde, wird die zweite Aufenthaltsabfrage gemäß dem zweistufigen bekannten Verfahren übersprungen und die direkte Verbindung für die optimierte Leitweglenkung kann unmittelbar anhand der bereits vorliegenden temporären Aufenthaltsrufnummer bereits frühzeitig aufgebaut werden.

Die Erfindung wird anhand eines in Figuren dargestellten Ausführungsbeispieles erläutert. Im einzelnen zeigen
- Figur 1: in einem Blockschaltbild den Nachrichtenfluß zwischen den von der Aufenthaltsabfrage betroffenen Netzeinrichtungen für eine optimierte Leitweglenkung über Netzgrenzen hinweg und
- Figur 2: in einem Ablaufdiagramm die Behandlung der Aufenthaltsabfrage durch das Heimatregister im Heimatnetz des angerufenen Funkteilnehmers.

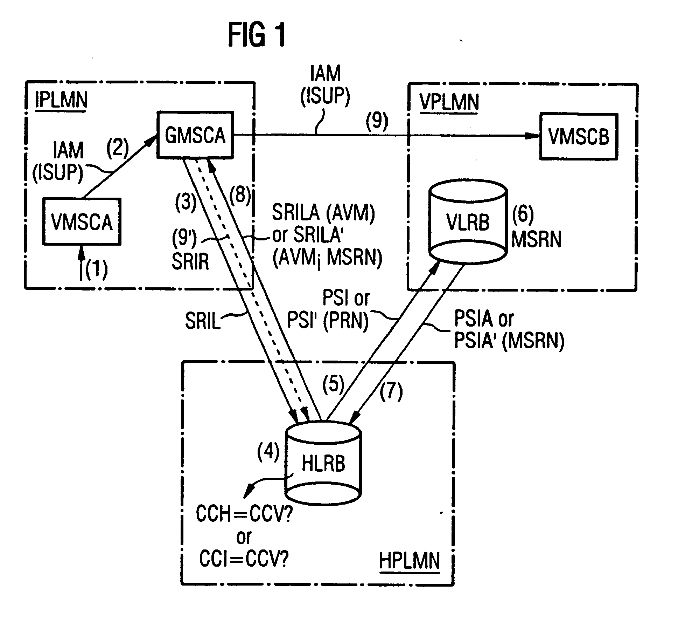

Das Blockschaltbild in Figur 1 zeigt am Beispiel des länderübergreifenden zellularen Mobilfunknetzes gemäß dem GSM-Standard den Ablauf zur Bestimmung des Aufenthaltsortes eines im zellularen Mobilfunknetz registrierten Funkteilnehmers. Dabei wird eine optimierte Leitweglenkung (optimal routing) bei dem an den Funkteilnehmer gerichteten ankommenden Anruf (mobile terminated call) unterstützt. Im vorliegenden Beispiel sei angenommen, daß es sich um einen Anruf handelt, der von einem A-Funkteilnehmer initiiert und an den B-Funkteilnehmer gerichtet wird (mobile-to-mobile call). Dabei befindet sich der A-Funkteilnehmer im Versorgungsbereich eines ersten Netzes IPLMN, während der B-Funkteilnehmer in einem anderen Netz HPLMN mit seinen Teilnehmerdaten permanent registriert und in einem weiteren Netz VPLMN aufgrund seines momentanen Aufenthaltsorts vorübergehend registriert wird. Für den angerufenen B-Funkteilnehmer stellt das Netz HPLMN sein Heimatnetz (Home PLMN) und das Netz VPLMN sein Besuchernetz (Visited PLMN) dar. Der Einfachheit halber sei auch angenommen, daß die Netze IPLMN, HPLMN und VPLMN einen identischen Netzaufbau gemäß dem länderübergreifenden internationalen GSM-Mobilfunknetz aufweisen, jedoch in unterschiedlichen Ländern von entsprechenden Netzbetreibern betrieben werden. So sei bespielsweise angenommen, daß der A-Funkteilnehmer von einem Mobilfunknetz in Deutschland aus anruft und der B-Funkteilnehmer im Mobilfunknetz der Schweiz beheimatet ist, jedoch aufgrund seines derzeitigen Aufenthaltsorts im Mobilfunknetz von Österreich als Besucher registriert ist.

Das Blockschaltbild zeigt eine Besucher-Mobilvermittlungsstelle VMSCA und eine Zugangs-Mobilvermittlungsstelle GMSCA im Netz IPLMN, ein Heimatregister HLRB im Netz HPLMN sowie ein Besucherregister VLRB und eine Besucher-Mobilvermittlungsstelle VMSCB im Netz VPLMN. Im vorliegenden Beispiel wird der an den B-Funkteilnehmer gerichtete ankommende Anruf von einem A-Funkteilnehmer initiiert, der sich beim Initiieren des Anrufes im Versorgungsbereich der Besucher-Mobilvermittlungsstelle VMSCA befindet. Selbstverständlich ist es auch möglich, daß der Anruf von einem leitungsgebundenen A-Teilnehmer - beispielsweise aus dem öffentlichen Fernsprechnetz (PSTN) - gestartet wird. Beiden Alternativen ist gemeinsam, daß der Anruf an die Zugangs-Mobilvermittlungsstelle GMSCA, die im Netz IPLMN an der Schnittstelle zu anderen Netzen angeordnet ist, weitergeleitet wird. Darüber hinaus können auch Besucher-Mobilvermittlungsstelle VMSCA und Zugangs-Mobilvermittlungsstelle GMSCA zusammenfallen.

Aufgrund der vom A-Funkteilnehmer gewählten Teilnehmerrufnummer des B-Funkteilnehmers - durch Eingabe in eine Funkteilnehmerstation - empfängt die Besucher-Mobilvermittlungsstelle VMSCA über das entsprechende Basisstationssystem im Netz IPLMN eine Nachricht (call setup) zum Aufbau einer Signalisierungsverbindung (1). Die Besucher-Mobilvermittlungsstelle VMSCA sendet eine Anforderung zur Behandlung eines abgehenden Anrufes an ein - nicht dargestelltes - Besucherregister, das der Besucher-Mobilvermittlungsstelle VMSCA die Erlaubnis zum Aufbau der Signalisierungsverbindung signalisiert. Die Besucher-Mobilvermittllungsstelle VMSCA sendet daraufhin eine Nachricht IAM (Initial Address Message) gemäß dem ISDN-Benutzerteil ISUP, der auf den Verbindungsleitungen zwischen den Mobilvermittlungsstellen vewendet wird, zur Zugangs-Mobilvermittlungsstelle GMSCA aus (2). Für den hier vorliegenden Fall, daß die Zugangs-Mobilvermittlungsstelle GMSCA sich in einem anderen Netz als dem Heimatnetz des B-Funkteilnehmers befindet, wird eine Nachricht SRIL zur Aufenthaltsabfrage von der Zugangs-Mobilvermittlungsstelle GMSCA an das Heimatregister HLRB im Heimatnetz HPLMN gesendet. Diese Aufenthaltsabfrage (send location info) enthält einen Hinweis, daß es sich um eine Anfrage einer Aufenthaltsinformation im Rahmen der optimierten Leitweglenkung handelt. Dabei wird die Nachricht SRIL gemäß einem mobilfunkspezifischen Anwenderteil (MAP) übertragen (3).

Das Heimatregister HLRB überprüft nach Empfang der Nachricht SRIL, ob ein Aufbau der direkten Verbindung zwischen der Zugangs-Mobilvermittlungsstelle GMSCA im Netz IPLMN und der Besucher-Mobilvermittlungsstelle VMSCP im anderen Netz VPLMN aus Gründen der Vergebührung des Anrufes durchführbar ist. Diese Überprüfung besteht beispielsweise aus einem Vergleich von Länderkennungen, die der Zugangs-Mobilvermittlungsstelle GMSCA und der Besucher-Mobilvermittlungsstelle VMSCB bzw. dem Heimatregister HLRB zugeordnet sind. Die Vergebührungsanforderungen werden dabei so festgelegt, daß für einen Anruf, der gemäß der optimierten Leitweglenkung behandelt wird, nicht höhere Gebühren anfallen dürfen als für einen Anruf, der wie bei einer üblichen Leitweglenkung über das Heimatnetz des angerufenen Funkteilnehmers geführt wird. Daher überprüft das Heimatregister HLRB eine der Besucher-Mobilvermittlungsstelle VMSCB zugehörige Länderkennung CCV einerseits mit einer Länderkennung CCH des Heimatregisters HLRB und andererseits mit einer Länderkennung CCI der Zugangs-Mobilvermittlungsstelle GMSCA. Liefert zumindestens ein Vergleich die Identität der Länder, was einem positiven Vergleichergebnis entspricht, stellt das Heimatregister HLRB fest, daß ein direkter Verbindungsaufbau gemäß einer optimierten Leitweglenkung möglich ist, ohne gegen die Anforderungen bezüglich der Vergebührung des Anrufs zu verstoßen. Anhand der Länderkennungen kann das Heimatregister HLRB auf sehr einfache Weise feststellen, ob zumindestens zwei der drei Netzeinrichtungen, die von der Aufenthaltsabfrage und dem Verbindungsaufbau betroffen sind, in ein- und demselben Land angeordnet sind (4).

Der Länderkennungsvergleich stellt nur eine einfache Maßnahme zur Überprüfung, ob einem direkten Verbindungsaufbau aus Gründen der Vergebührung des Anrufes nichts im Wege steht, dar. Aufwendigere Maßnahmen zur Unterstützung oder Ablehnung der optimierten Leitweglenkung für die direkte Verbindung von Mobilvermittlungsstellen unterschiedlicher Netze können ohne weiteres im Heimatregister HLRB implementiert, aber auch alternativ auf die Zugangs-Mobilvermittlungsstelle, die die Aufenthaltsabfrage startet, verlagert werden, ohne daß das Prinzip der Bestimmung des Aufenthaltsorts gemäß der Erfindung davon beeinträchtigt wird. Bei einer Verlagerung aufwendigerer Prüfungsmaßnahmen auf die Zugangs-Mobilvermittlungsstelle kann die einfache Überprüfungsmöglichkeit durch Länderkennungsvergleich beim jeweiligen Heimatregister verbleiben.

Dadurch, daß das Heimatregister HLRB erfindungsgemäß den Länderkennungsvergleich selbst durchführt, kann bei positivem Vergleichsergebnis sofort, d.h. ohne ein Abwarten auf eine weitere Aufenthaltsabfrage von der Zugangs-Mobilvermittlungsstelle GMSCA, eine modifizierte Nachricht PSI' zum Besucherregister VLRB im Netz VPLMN gesendet werden. Die modifizierte Nachricht PSI' (provide subscriber info) dient üblicherweise zur Abfrage von Teilnehmerinformationen des B-Funkteilnehmers und enthält erfindungsgemäß zusätzlich ein Kennzeichen PRN zur Anforderung einer temporären Aufenthaltsrufnummer MSRN, die von dem Besucherregister VLRB vergeben wird. Durch die vorherige Überprüfung der Durchführbarkeit des Aufbaus einer direkten Verbindung hinsichtlich der Vergebührung des Anrufes durch das Heimatregister HLRB ist gewährleistet, daß unmittelbar nach Vorliegen des positiven Prüfungsergebnisses die temporäre Aufenthaltsrufnummer nur dann angefordert wird, wenn sichergestellt ist, daß sie auch benötigt wird. Auf diese Weise wird eine unnötige Vergabe von nicht genutzten temporären Aufenthaltsrufnummern durch das jeweils für den angerufenen B-Funkteilnehmer zuständige Besucherregister verhindert. Bevor das Heimatregister HLRB die modifizierte Nachricht PSI' mit dem neuen Kennzeichen PRN gemäß dem mobilfunkspezifischen Anwenderteil (MAP) zum Besucherregister VLRB aussendet, wird zuvor sicherheitshalber ermittelt, ob das Besucherregister VLRB eine optimierte Leitweglenkung unterstützt oder nicht. Liefert das Vergleichsergebnis im Heimatregister HLRB keine Übereinstimmung von Länderkennungen, so daß aus Vergebührungsgründen eine direkte Verbindung zwischen den Mobilvermittlungsstellen GMSCA und VMSCB nicht gewünscht ist, sendet das Heimatregister HLRB die übliche Nachricht PSI (provide subscriber info) zum Besucherregister VLRB, mit der Teilnehmerinformationen angefordert werden (5).

Im letztgenannten Fall überprüft das Besucherregister VLRB, ob der B-Funkteilnehmer erreichbar ist, d.h. ob seine Funkteilnehmerstation sich in einem ausgeschalteten Zustand, in einem Besetzt-Zustand oder dergleichen befindet. Das Besucherregister VLRB überprüft jede vom Heimatregister HLRB kommende Nachricht, mit der Teilnehmerinformationen angefordert werden, auf das Vorhandensein des Kennzeichens PRN, was bedeutet, daß es sich um eine modifizierte Nachricht PSI' zur Anforderung einer temporären Aufenthaltsrufnummer MSRN handelt. Ist dies der Fall, vergibt das Besucherregister VLRB eine temporäre Aufenthaltsrufnummer MSRN, die zum Verbindungsaufbau zwischen der Zugangs-Mobilvermittlungsstelle GMSCA und der Besucher-Mobilvermittlungsstelle VMSCB verwendet und nach Beendigung des Verbindungsaufbaus für weitere Verbindungsaufbauprozesse wieder freigegeben wird. Die Überprüfung der ankommenden Nachricht PSI bzw. PSI' auf das Vorhandensein des Kennzeichens PRN wird vom Besucherregister VLRB nur dann durchgeführt, wenn der B-Funkteilnehmer über seine Funkteilnehmerstation erreichbar ist, d.h. die Funkteilnehmerstation sich nicht in einem abgeschalteten Zustand oder einem von der Funkversorgunbg abgeschnittenen Zustand (detach status) befindet (6).

Ist das Besucherregister VLRB zur Vergabe und Übermittlung einer temporären Aufenthaltsrufnummer MSRN nicht aufgefordert worden, so sendet es eine Nachricht PSIA zum Heimatregister HLRB aus, in der der Zustand des B-Funkteilnehmers mitgeteilt wird. Ist jedoch die Aufenthaltsrufnummer MSRN vom Besucherregister VLRB vergeben worden, wird sie zusätzlich zur Information über den Zustand des B-Funkteilnehmers in einer Nachricht PSIA' zum Heimatregister HLRB übertragen. Mit der Nachricht PSIA bzw. PSIA' wird vom Besucherregister VLRB die Abfrage der Teilnehmerinformationen (PSI bzw. PSI') durch das Heimatregister HLRB quittiert (7).

Empfängt das Heimatregister HLRB als Quittung in der Nachricht PSIA eine Information, daß der B-Funkteilnehmer erreichbar ist, wird - da keine temporäre Aufenthaltsrufnummer MSRN empfangen wurde - eine Nachricht SRILA erzeugt und zur Zugangs-Mobilvermittlungsstelle GMSCA als Quittung für die Aufenthaltsabfrage SRIL rückgesendet. Dabei wird in der Nachricht SRILA eine Information zur Identifikation der Besucher-Mobilvermittlungsstelle VMSCB, die für den B-Funkteilnehmer zuständig ist, mitgesendet. Vorzugsweise besteht diese Information aus der Adresse AVM der Besucher-Mobilvermittlungsstelle VMSCB. Empfängt das Heimatregister HLRB eine temporäre Aufenthaltsrufnummer MSRN vom Besucherregister VLRB, wird eine Nachricht SRILA' erzeugt, mit der die Aufenthaltsabfrage SRIL quittiert und zusätzlich die bereitgestellte Aufenthaltsrufnummer MSRN zusätzlich zur Adresse AVM zur Zugangs-Mobilfunkvermittlungsstelle GMSCA übertragen wird (8).

Die Zugangs-Vermittlungsstelle GMSCA empfängt in der vom Heimatregister HLRB gesendeten Quittungsnachricht die Adresse der Besucher-Mobilvermittlungsstelle VMSCB, zu der die Verbindung aufzubauen ist und überprüft zusätzlich, ob auch eine temporäre Aufenthaltsrufnummer MSRN in der Quittungsnachricht vorliegt. Ist dies der Fall, wird anhand der empfangenen Aufenthaltsrufnummer MSRN die direkte Verbindung gemäß der optimierten Leitweglenkung zwischen Zugangs-Mobilvermittlungsstelle GMSCA und Besucher-Mobilvermittlungsstelle VMSCB aufgebaut und die Nachricht IAM gemäß dem ISDN-Benutzerteil ISUP zur Besucher-Mobilvermittlungsstelle übertragen (9).

Auf diese Weise kann eine direkte Verbindung zur Unterstützung einer optimierten Leitweglenkung zwischen Mobilvermittlungsstellen verschiedener Netze bei einem an einen B-Funkteilnehmer gerichteten ankommenden Anruf aufgebaut werden, bei der zur Bestimmung des Aufenthaltsortes des B-Funkteilnehmers eine gegenüber dem bekannten Verfahren geringere Signalisierungslast zwischen den Netzeinrichtungen und eine kürzere Verbindungsaufbauzeit erzielt wird. Die Verringerung der Signalisierungslast und die Verkürzung der Verbindungsaufbauzeit ist dadurch möglich, daß vom Heimatregister HLRB selbst die Überprüfung der Durchführbarkeit der direkten Verbindung hinsichtlich der Vergebührungsanforderungen überprüft und bei positivem Prüfungsergebnis sofort, d.h. ohne ein Abwarten einer weiteren Aufenthaltsabfrage durch die Zugangs-Mobilvermittlungsstelle, eine temporäre Aufenthaltsrufnummer von dem jeweils für den B-Funkteilnehmer aktuell zuständigen Besucherregister angefordert und zur Zugangs-Mobilvermittlungsstelle für den Verbindungsaufbau rückgesendet werden kann.

Für den Fall, daß die Zugangs-Mobilvermittlungsstelle GMSCA in der Quittungsnachricht SRILA keine Aufenthaltsrufnummer MSRN empfängt, kann eine zweite Aufenthaltsabfrage SRIR (send routing info) an das Heimatregister HLRB gesendet werden, um ggf. in einer zweiten Stufe eine Aufenthaltsrufnummer MSRN zu erhalten. Die letztgenannte Vorgehensweise wird vorzugsweise dann eingesetzt, wenn Heimatregister in Heimatnetzen verwendet werden, die nicht gemäß dem Verfahren der vorliegenden Erfindung betrieben werden.

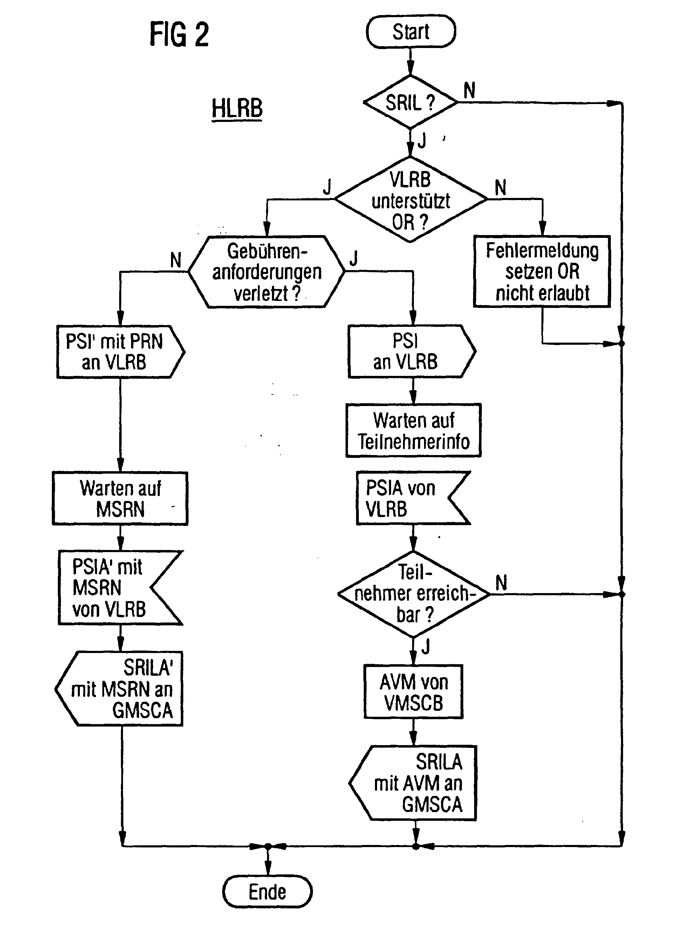

Figur 2 zeigt ein Ablaufdiagramm zur Behandlung der Aufenthaltsabfrage für die Bestimmung des Aufenthaltsortes des B-Funkteilnehmers durch das Heimatregister HLRB, in dem der angerufene B-Funkteilnehmer mit seinen Teilnehmerdaten permanent gespeichert ist. Zunächst überprüft das Heimatregister HLRB, ob die Nachricht SRIL empfangen wird, mit der die Aufenthaltsabfrage von der Zugangs-Mobilvermittlungsstelle eines anderen Netzes netzübergreifend im Heimatnetz eintrifft. Das Heimatregister HLRB ermittelt bei Empfang der Nachricht SRIL zunächst, ob das für den angerufenen B-Funkteilnehmer aktuell zuständige Besucherregister VLRB einen direkten verbindungsaufbau zwischen Mobilvermittlungsstellen unterschiedlicher Netze gemäß einer optimierten Leitweglenkung OR (optimal routing) grundsätzlich unterstützt. Ist dies nicht der Fall, wird vom Heimatregister HLRB eine Fehlermeldung erzeugt, durch die signalisiert wird, daß eine optimierte Leitweglenkung OR nicht erlaubt ist.

Unterstützt das angesprochende Besucherregister VLRB eine optimierte Leitweglenkung OR, überprüft das Heimatregister HLRB ob der Aufbau der direkten Verbindung zwischen der Zugangs-Mobilvermittlungsstelle und der Besucher-Mobilvermittlungsstelle aus Gründen der Vergebührung des Anrufes durchführbar ist. Die Überprüfung erfolgt in einfacher Weise durch den Vergleich der Länderkennungen der beiden Mobilvermittlungsstellen bzw. der Länderkennungen des Heimatregisters und der Besucher-Mobilvermittlungsstelle. Liefert nicht zumindestens ein Vergleich identische Länderkennungen, sendet das Heimatregister HLRB die Nachricht PSI an das Besucherregister VLRB, um Teilnehmerinformationen abzurufen. Während der Überprüfung des Teilnehmerstatus durch das Besucherregister VLRB befindet sich das Heimatregister HLRB in einem Wartezustand, der solange anhält, bis vom Besucherregister VLRB die Nachricht PSIA empfangen wird, mit der das Besucherregister VLRB den Zustand des B-Funkteilnehmers bzw. seiner Funkteilnehmerstation signalisiert. Befindet sich der angerufene B-Funkteilnehmer in einem Zustand, in dem er nicht erreichbar ist (detach status), beispielsweise durch eine abgeschaltete Funkteilnehmerstation oder eine mangelnde Funkabdeckung, wird die Aufenthaltsabfrage vorzeitig abgebrochen. Ist der B-Funkteilnehmer erreichbar, stellt das Heimatregister HLRB die Adresse AVM der Besucher-Mobilvermittlungsstelle VMSCB als Leitweginformation bzw. Leitwegadresse zur Verfügung und sendet sie in der Nachricht SILA an die Zugangs-Mobilvermittlungsstelle GMSCA zurück. Mit der Nachricht SRILA wird die von der Zugangs-Mobilvermittlungsstelle initiierte Aufenthaltsabfrage, erkennbar an der eingetroffenen Nachricht SRIL, vom Heimatregister HLRB quittiert.

Ergibt der Vergleich der jeweiligen Länderkennungen durch das Heimatregister HLRB, daß aus Gründen der Vergebührung des Anrufs einem direkten Verbindungsaufbau zwischen den beiden Mobilvermittlungsstellen gemäß der optimierten Leitweglenkung keine Anforderungen entgegenstehen, sendet das Heimatregister HLRB unmittelbar nach der Überprüfung die modifizierte Nachricht PSI' mit einem zusätzlichen Kennzeichen PRN an das zuständige Besucherregister VLRB aus. Dabei signalisiert das Kennzeichen PRN die Anforderung einer temporären Aufenthaltsrufnummer MSRN, die vom Besucherregister VLRB aufgrund seiner Zuständigkeit für den B-Funkteilnehmer für den Verbindungsaufbau zwischen A-Funkteilnehmer und B-Funkteilnehmer vorübergehend vergeben wird. Während der Zuteilung einer temporären Aufenthaltsrufnummer MSRN aus einem vorgegebenen Nummernvorrat befindet sich das Heimatregister HLRB in einem Wartezustand, der mit Empfang der Nachricht PSIA' beendet ist. Die Nachricht PSIA' dient als Quittung für die zuvor eingetroffene Nachricht PSI'. Dabei wird die vom Besucherregister VLRB zugeteilte temporäre Aufenthaltsrufnummer MSRN als zusätzlicher Parameter in der Nachricht PSIA' zum Heimatregister HLRB rückgesendet. Daraufhin sendet das Heimatregister HLRB die Nachricht SRILA' mit der Aufenthaltsrufnummer MSRN an die Zugangs-Mobilvermittlungsstelle GMSCA zurück, um die an der eingetroffenen Nachricht SRIL erkennbare Aufenthaltsabfrage zu quittieren und der Zugangs-Mobilvermittlungsstelle die Unterstützung der optimierten Leitweglenkung zu signalisieren. Anhand der eingetroffenen Aufenthaltsrufnummer MSRN kann die Zugangs-Mobilvermittlungsstelle GMSCA direkt einen Verbindungsaufbau zur Besucher-Mobilvermittlungsstelle VMSCB aufbauen. Der weitere Verbindungsaufbau über das Basisstationssystem in dem für den B-Funkteilnehmer aktuell zuständigen Netz erfolgt anhand bekannter Prozeduren, die von der vorliegenden Erfindung nicht berührt werden. Durch die Überprüfung der Durchführbarkeit eines direkten Verbindungsaufbaus zwischen Mobilvermittlungsstellen über Netzgrenzen hinweg und durch soforten Anforderung einer temporären Aufenthaltsrufnummer bei positiven Prüfungsergebnis durch das für den angerufenen B-Funkteilnehmer jeweils zuständige Heimatregister in seinem Heimatnetz kann die Signalisierungslast verringert und die Verbindungsaufbauzeit verkürzt werden.

## Patentansprüche

1. Verfahren zur Bestimmung des Aufenthaltsorts eines in einem zellularen Mobilfunknetz registrierten Funkteilnehmers für eine optimierte Leitweglenkung bei einem an den Funkteilnehmer gerichteten ankommenden Anruf, bei dem
- auf Grund der Teilnehmerrufnummer des angerufenen Funkteilnehmers von einer Zugangs-Mobilvermittlungsstelle (GMSCA) eines ersten Netzes (IPLMN) eine Nachricht (SRIL) zur Aufenthaltsabfrage an ein Heimatregister (HLRB) eines anderen Netzes (HPLMN), in dem der Funkteilnehmer permanent mit seinen Teilnehmerdaten registriert ist, netzübergreifend gesendet wird,
- von dem Heimatregister (HLRB) eine Nachricht (PSI oder PSI') zur Abfrage des Aufenthaltsorts an ein Besucherregister (VLRB) eines weiteren Netzes (VPLMN) gerichtet wird, in dem der Funkteilnehmer auf Grund seines momentanen Aufenthaltsorts aktuell registriert wird und eine Besucher-Mobilvermittlungsstelle (VMSCB) dem Besucherregister (VLRB) zugeordnet wird , und bei dem
- zur Unterstützung der optimierten Leitweglenkung überprüft wird, ob eine direkte Verbindung zwischen der Zugangs-Mobilvermittlungsstelle (GMSCA) und der Besucher-Mobilvermittlungsstelle (VMSCB) aus Gründen der Vergebührung des Anrufs durchführbar ist,
**dadurch gekennzeichnet,**
**daß** bei Empfang der Nachricht (SRIL) zur Aufenthaltsabfrage vom Heimatregister (HLRB) die Durchführbarkeit des Aufbaus der direkten Verbindung überprüft und bei positivem Prüfungsergebnis eine modifizierte Nachricht (PSI'), in der zusätzlich ein Kennzeichen (PRN) zur Anforderung einer temporären Aufenthaltsrufnummer (MSRN) enthalten ist, an das Besucherregister (VLRB) gesendet wird.

2. Verfahren nach Anspruch 1,
**dadurch gekennzeichnet,**
**daß** von dem Besucherregister (VLRB) die Nachricht (PSI') zur Abfrage des Aufenthaltsorts auf das Vorhandensein des Kennzeichens (PRN) überprüft und bei positivem Prüfungsergebnis die Aufenthaltsrufnummer (MSRN) vergeben wird, die in einer Nachricht (PSIA'), mit der die Anfrage quittiert wird, zusätzlich zum Heimatregister (HLRB) übertragen wird.

3. Verfahren nach Anspruch 2,
**dadurch gekennzeichnet,**
**daß** vom Besucherregister (VLRB) die Überprüfung der Nachricht (PSIoder PSI') zur Abfrage des Aufenthaltsorts nur für den Fall, daß der Funkteilnehmer erreichbar ist, durchgeführt wird.

4. Verfahren nach einem der Ansprüche 1 bis 3,
**dadurch gekennzeichnet,**
**daß** vom Heimatregister (HLRB) eine Nachricht (SRILA) zur Zugangs-Mobilvermittlungsstelle (GMSCA) rückgesendet wird, mit der die Aufenthaltsabfrage quittiert und zumindestens eine Information (AVM) zur Identifikation der Besucher-Mobilvermittlungsstelle (VMSCB) übertragen wird.

5. Verfahren nach einem der Ansprüche 1 bis 3,
**dadurch gekennzeichnet,**
**daß** vom Heimatregister (HLRB) eine Nachricht (SRILA') zur Zugangs-Mobilvermittlungsstelle (GMSCA) rückgesendet wird, mit der die Aufenthaltsabfrage quittiert und zumindestens die vom Besucherregister (VLRB) auf Anforderung vergebene Aufenthaltsrufnummer (MSRN) übertragen wird.

6. Verfahren nach Anspruch 4 oder 5,
**dadurch gekennzeichnet,**
**daß** von der Zugangs-Mobilvermittlungsstelle (GMSCA) die eintreffende Nachricht (SRILA oder SRILA') auf Vorhandensein der Aufenthaltsrufnummer (MSRN) überprüft wird und daß bei positivem Prüfungsergebnis anhand der Aufenthaltsrufnummer (MSRN) die direkte Verbindung zur Besucher-Mobilvermittlungsstelle (VMSCB) aufgebaut oder bei negativem Prüfungsergebnis eine zweite Nachricht (SRIR) zur Aufenthaltsabfrage an das Heimatregister (HLRB) gesendet wird.

7. Verfahren nach einem der vorhergehenden Ansprüche,
**dadurch gekennzeichnet,**
**daß** vom Heimatregister (HLRB) die Durchführbarkeit des Aufbaus der direkten Verbindung durch Vergleich von Länderkennungen überprüft wird, die der Zugangs-Mobilvermittlungsstelle (GMSCA), der Besucher-Mobilvermittlungsstelle (VMSCB) und dem Heimatregister (HLRB) zuordenbar sind.

8. Verfahren nach Anspruch 7,
**dadurch gekennzeichnet,**
**daß** die Länderkennung der Zugangs-Mobilvermittlungsstelle (GMSCA) mit der Länderkennung der Besucher-Mobilvermittlungsstelle (VMSCB) verglichen wird und daß bei Identität der beiden Länderkennungen vom Heimatregister (HLRB) die temporäre Aufenthaltsrufnummer (MSRN) in der modifizierten Nachricht (PSI') angefordert wird.

9. Verfahren nach Anspruch 7,
**dadurch gekennzeichnet,**
**daß** die Länderkennung des Heimatregisters (HLRB) mit der Länderkennung der Besucher-Mobilvermittlungsstelle (VMSCB) verglichen wird und daß bei Identität der beiden Länderkennungen vom Heimatregister (HLRB) die temporäre Aufenthaltsrufnummer (MSRN) in der modifizierten Nachricht (PSI') angefordert wird.

10. System zur Bestimmung des Aufenthaltsorts eines in einem zellularen Mobilfunknetz registrierten Funkteilnehmers für eine optimierte Leitweglenkung bei einem an den Funkteilnehmer gerichteten ankommenden Anruf, mit
- einer Zugangs-Mobilvermittlungsstelle (GMSCA) eines ersten Netzes (IPLMN), von der auf Grund der Teilnehmerrufnummer des angerufenen Funkteilnehmers eine Nachricht (SRIL) zur Aufenthaltsabfrage an ein Heimatregister (HLRB) eines anderen Netzes (HPLMN), in dem der Funkteilnehmer permanent mit seinen Teilnehmerdaten registriert wird, netzübergreifend gesendet wird,
- Mittel im Heimatregister (HLRB) zum Aussenden einer Nachricht (PSI oder PSI') zur Abfrage des Aufenthaltsorts an ein Besucherregister (VLRB) eines weiteren Netzes (VPLMN), in dem der Funkteilnehmer auf Grund seines momentanen Aufenthaltsorts aktuell registriert und eine Besucher-Mobilvermittlungsstelle (VMSCB) dem Besucherregister (VLRB) zugeordnet ist, und mit
- Mittel zur Unterstützung der optimierten Leitweglenkung, mit denen überprüft wird, ob eine direkte Verbindung zwischen der Zugangs-Mobilvermittlungsstelle (GMSCA) und der Besucher-Mobilvermittlungsstelle (VMSCB) aus Gründen der Vergebührung des Anrufs durchführbar ist,
**dadurch gekennzeichnet,**
**daß** das Heimatregister (HLRB) über Mittel verfügt, die bei Empfang der Nachricht (SRIL) zur Aufenthaltsabfrage die Durchführbarkeit des Aufbaus der direkten Verbindung überprüfen und bei positivem Prüfungsergebnis eine modifizierte Nachricht (PSI'), in der zusätzlich ein Kennzeichen (PRN) zur Anforderung einer temporären Aufenthaltsrufnummer (MSRN) enthalten ist, an das Besucherregister (VLRB) senden.

## Claims

1. Method for determining the location of a mobile radio subscriber registered in a cellular mobile radio network for optimized routing for an incoming call directed to a mobile radio subscriber, in which
- on the basis of the subscriber telephone number of the called mobile radio subscriber a message (SRIL) for requesting the location is sent from a Gateway Mobile Switching Centre (GMSCA) of a first network (IPLMN) across the networks to a Home Location Register (HLRB) of another network (HPLMN), in which the B-mobile radio subscriber is permanently registered with his subscriber data,
- a message (PSI or PSI') for requesting the location is directed from the Home Location Register (HLRB) to a Visitor Location Register (VLRB) of a further network (VPLMN) in which the B-mobile radio subscriber is currently registered because of his current location and a Visitor Mobile Switching Centre (VMSCB) is assigned to the Visitor Location Register (VLRB), and in which
- to support optimized routing, a check is made as to whether a direct connection between the Gateway Mobile Switching Centre (GMSCA) and the Visitor Mobile Switching Centre (VMSCB) can be executed for billing reasons,
**characterized in that**
on receipt of the message (SRIL) for location request from the Home Location Register (HLRB) a check is made as to whether the direct connection can be executed, and if the result is positive, a modified message (PSI'), in which additionally a code (PRN) for requesting a temporary Mobile Subscriber Roaming Number (MSRN) is contained is sent to the Visitor Location Register (VLRB).

2. Method in accordance with claim 1,
**characterized in that**
the message (PSI') for requesting the location is checked by the Visitor Location Register (VLRB) for the presence of the code (PRN) and, if the result of the check is positive, the Mobile Subscriber Roaming Number (MSRN) is issued which is additionally transmitted to the Home Location Register (HLRB) in a message (PSIA'), with which the request is acknowledged.

3. Method in accordance with claim 2,
**characterized in that**
the message (PSI or PSI') for requesting the location is only checked by the Visitor Location Register (VLRB) in the event of the B-mobile radio subscriber being available.

4. Method in accordance with one of the claims 1 to 3,
**characterized in that**
a message (SRILA) is returned to the Gateway Mobile Switching Centre (GMSCA) by the Home Location Register (HLRB) with which the location request is acknowledged and at least one item of information (AVM) for identification of the Visited Mobile Switching Centre (VMSCB) is transmitted.

5. Method in accordance with one of the claims 1 to 3,
**characterized in that**
a message (SRILA') to the Gateway Mobile Switching Centre (GMSCA) is returned by the Home Location Register (HLRB) with which the location request is acknowledged and at least the Mobile Subscriber Roaming Number (MSRN) issued by the Visitor Location Register (VLRB) on request is transmitted.

6. Method in accordance with Claim 4 or 5,
**characterized in that**
the incoming message (SRILA or SRILA') is checked by the Gateway Mobile Switching Centre (GMSCA) for the presence of the Mobile Subscriber Roaming Number (MSRN) and if the result of the check is positive, on the basis of the Mobile Subscriber Roaming Number (MSRN:) the direct connection to the Visited Mobile Switching Centre (VMSCB) is set up. or for a negative check result, a second message (SRIR) for requesting the location is sent to the Home Location Register (HLRB).

7. Method in accordance with one of the previous claims.
**characterized in that**
the Home Location Register (HLRB) checks whether the setup of direct connection can be executed by comparing country codes which can be assigned to the Gateway Mobile Switching Centre (GMSCA), the Visited Mobile Switching Centre (VMSCB) and the Home Location Register (HLRB).

8. Method in accordance with claim 7,
**characterized in that**
the country code of the Gateway Mobile Switching Centre (GMSCA) is compared to the country code of the Visited Mobile Switching Centre (VMSCB) and, if the two country codes are identical, the temporary Mobile Subscriber Roaming Number (MSRN) is requested in the modified message (PSI') from the Home Location Register (HLRB).

9. Method in accordance with claim 7,
**characterized in that**
the country code of the Home Location Register (HLRB) is compared to the country code of the Visited Mobile Switching Centre (VMSCB) and, if the two codes are identical, the temporary Mobile Subscriber Roaming Number (MSRN) is requested in the modified message (PSI') from the Home Location Register (HLRB).

10. System for determining the location of a mobile radio subscriber registered in a cellular mobile radio network for optimal routing for an incoming call directed to a B-mobile radio subscriber, with
- a Gateway Mobile Switching Centre (GMSCA) of a first network (IPLMN), from which, based on the subscriber number of the called mobile radio subscriber, a message (SRIL) for location request is sent across network boundaries to a Home Location Register (HLRB) of another network (HPLMN), in which the B-mobile radio subscriber is permanently registered with his subscriber data,
- Means in the Home Location Register (HLRB) for sending out a message (PSI or PSI') to a Visitor Location Register (VLRB) of a further network (VPLMN) for requesting the location, in which the B-mobile radio subscriber is currently registered because of his current location and a Visited Mobile Switching Centre (VMSCB) is assigned to the Visitor Location Register (VLRB), and with
- Means for supporting optimal routing with which a check can be made as to whether a direct connection between the Gateway Mobile Switching Centre (GMSCA) and the Visited Mobile Switching Centre (VMSCB) can be executed for reasons of billing the call,
**characterized in that**
the Home Location Register (HLRB) has means which, on receipt of the message (SRIL) for location request, check the executabilty of the setup of the direct connection, and if the result of the check is positive, send a modified message (PSI'), in which an additional code (PRN) for requesting a temporary Mobile Subscriber Roaming Number (MSRN) is contained, to the Visitor Location Register (VLRB).

## Revendications

1. Procédé pour la localisation d'un abonné radio enregistré dans un réseau radio mobile cellulaire pour un routage optimisé lors d'un appel arrivant et destiné à l'abonné radio, dans lequel
- sur la base du numéro d'appel d'abonné de l'abonné radio appelé, un centre de commutation du service mobile d'accès (GMSCA) d'un premier réseau (IPLMN) envoie au niveau du réseau un message (SRIL) concernant l'interrogation de séjour à un registre local (HLRB) d'un autre réseau (HPLMN), dans lequel l'abonné radio est enregistré de façon permanente avec ses données d'abonné,
- le registre local (HLRB) adresse un message (PSI ou PSI') concernant l'interrogation du lieu de séjour à un registre visiteur (VLRB) d'un autre réseau (VPLMN), dans lequel l'abonné radio est enregistré actuellement sur la base de son lieu de séjour momentané et un centre de commutation du service mobile visiteur (VMSCB) est attribué au registre visiteur (VLRB), et dans lequel
- pour le soutien du routage optimisé, on vérifie si une liaison directe entre le centre de commutation du service mobile d'accès (GMSCA) et le centre de commutation du service mobile visiteur (VMSCB) peut être réalisée pour des raisons de taxation de l'appel,
**caractérisé en ce que**
lors de la réception du message (SRIL) concernant l'interrogation de séjour, le registre local (HRLB) vérifie la réalisabilité de l'établissement de la liaison directe et, en cas de résultat de contrôle positif, un message (PSI') modifié, qui contient en plus un signe distinctif (PRN) concernant la demande d'un numéro d'appel de séjour (MSRN) temporaire, est envoyé au registre visiteur (VLRB).

2. Procédé selon la revendication 1,
**caractérisé en ce que**
le registre visiteur (VLRB) vérifie la présence du signe distinctif (PRN) dans le message (PSI') concernant l'interrogation du lieu de séjour et, en cas de résultat de contrôle positif, le numéro d'appel de séjour (MSRN) est attribué, lequel est transmis dans un message (PSIA'), avec lequel la demande est confirmée, en supplément du registre local (HLRB).

3. Procédé selon la revendication 2,
**caractérisé en ce que**
le registre visiteur (VLRB) effectue le contrôle du message (PSI ou PSI') concernant la demande du lieu de séjour seulement dans le cas où l'abonné radio peut être joint.

4. Procédé selon l'une quelconque des revendications 1 à 3,
**caractérisé en ce que**
le registre local (HLRB) renvoie un message (SRILA) au centre de commutation du service mobile d'accès (GMSCA), avec lequel la demande du séjour est confirmée et au moins une information (AVM) concernant l'identification est transmise au centre de commutation du service mobile visiteur (VMSCB).

5. Procédé selon l'une quelconque des revendications 1 à 3,
**caractérisé en ce que**
le registre local (HRLB) envoie un message (SRILA') au centre de commutation du service mobile d'accès (GMSCA), par lequel l'interrogation de séjour est confirmée et au moins le numéro d'appel du séjour (MSRN) attribué sur demande par le registre visiteur (VLRB) est transmis.

6. Procédé selon la revendication 4 ou 5,
**caractérisé en ce que**
le centre de commutation du service mobile d'accès (GMSCA) vérifie la présence du numéro d'appel de séjour (MSRN) dans le message arrivant (SRILA ou SRILA') et **en ce que**, en cas de résultat de contrôle positif, la liaison directe avec le centre de commutation du service mobile visiteur (VMSCB) est établie à l'aide du numéro d'appel de séjour (MSRN) ou bien, en cas de résultat de contrôle négatif, un second message (SRIR) concernant l'interrogation de séjour est envoyé au registre local (HLRB).

7. Procédé selon l'une quelconque des revendications précédentes,
**caractérisé en ce que**
le registre local (HLRB) vérifie la réalisabilité de l'établissement de la liaison directe par comparaison de codes de pays qui peuvent être attribués au centre de commutation du service mobile d'accès (GMSCA), au centre de commutation du service mobile visiteur (VMSCB) et au registre local (HLRB).

8. Procédé selon la revendication 7,
**caractérisé en ce que**
le code des pays du centre de commutation du service mobile d'accès (GMSCA) est comparé avec le code des pays du centre de commutation du service mobile visiteur (VMSCB), et **en ce que**, en cas d'identité des deux codes de pays, le registre local (HLRB) demande le numéro d'appel de séjour (MSRN) temporaire dans le message (PSI') modifié.

9. Procédé selon la revendication 7,
**caractérisé en ce que**
le code des pays du registre local (HLRB) est comparé avec le code des pays du centre de commutation du service mobile visiteur (VMSCB) et **en ce que**, en cas d'identité des deux codes de pays, le registre local (HLRB) demande le numéro d'appel de séjour (MSRN) temporaire dans le message (PSI') modifié.

10. Système pour la localisation d'abonné radio enregistré dans un réseau radio mobile cellulaire, pour un routage optimisé lors d'un appel arrivant et destiné à l'abonné radio, comprenant
- un centre de commutation du service mobile d'accès (GMSCA) d'un premier réseau (IPLMN), lequel, sur la base du numéro d'appel d'abonné de l'abonné radio appelé, envoie un message (SRIL) concernant l'interrogation de séjour au-delà du réseau à un registre local (HLRB) d'un autre réseau (HPLMN), dans lequel l'abonné radio est enregistré de façon permanente avec ses données d'abonné,
- des moyens dans le registre local (HLRB) pour l'envoi d'un message (PSI ou PSI') concernant l'interrogation du lieu de séjour à un registre visiteur (VLRB) d'un autre réseau (VPLMN), dans lequel l'abonné radio est enregistré actuellement sur la base de son lieu de séjour momentané et un centre de commutation du service mobile abonné (VMSCB), est attribué au registre visiteur (VLRB), et avec
- des moyens pour soutenir le routage optimisé, avec lesquels on vérifie si une liaison directe entre le centre de commutation du service mobile d'accès (VMSCA) et le centre de commutation du service mobile visiteur (VMSCB) est réalisable pour des raisons de taxation de l'appel,
**caractérisé en ce que**
le registre local (HLRB) dispose de moyens, qui, lors de la réception du message (SRIL) concernant l'interrogation de séjour, contrôlent la réalisabilité de l'établissement de la liaison directe, et, en cas de résultat d'examen positif, envoie un message (PSI') modifié, qui contient en supplément un signe distinctif (PRN) concernant la demande d'un numéro d'appel de séjour (MSRN) temporaire, au registre visiteur (VLRB).
